Europäisches Patentamt

European Patent Office

Office européen des brevets

(11) Publication number: **0 085 116**
**B1**

(12) **EUROPEAN PATENT SPECIFICATION**

(45) Date of publication of patent specification: **07.01.88**

(21) Application number: **82902463.7**

(22) Date of filing: **18.08.82**

(86) International application number:
**PCT/JP82/00322**

(87) International publication number:
**WO 83/00667 03.03.83 Gazette 83/06**

(51) Int. Cl.⁴: **B 60 T 17/02**

(54) **DEVICE FOR DRIVING VACUUM PUMP.**

(30) Priority: **18.08.81 JP 122893/81 u**

(43) Date of publication of application:
**10.08.83 Bulletin 83/32**

(45) Publication of the grant of the patent:
**07.01.88 Bulletin 88/01**

(84) Designated Contracting States:
**DE FR**

(56) References cited:
**DE-A-2 012 760**
**DE-A-3 219 133**
**JP-B-53 026 249**
**JP-U-55 175 560**
**JP-Y-53 000 658**
**US-A-2 469 936**
**US-A-2 678 156**
**US-A-3 283 527**

**Betsuyaku Banai "Mechanism" 30.April 1967**
**Gihodo (Tokyo), p.486-487**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **OGAWA, Hitoshi Mitsubishi Denki K. K.**
**Himeji Seisakusho, 840 Chiyodacho Himeji-shi**
**Hyogo 670 (JP)**

(74) Representative: **Sajda, Wolf E., Dipl.-Phys. et al**
**MEISSNER, BOLTE & PARTNER**
**Widenmayerstrasse 48 Postfach 86 06 24**
**D-8000 München 86 (DE)**

Courier Press, Leamington Spa, England.

# Description

The invention relates to a vacuum pump apparatus comprising a vacuum pump having vanes mounted on a rotor in an operating chamber and capable of pumping a fluid from a suction port to an exhaust port provided on the chamber, and an electric motor having a longitudinal rotary shaft journaled in bearings in a housing and to which the rotor of the vacuum pump and a fan are mounted to be driven rotatably thereby.

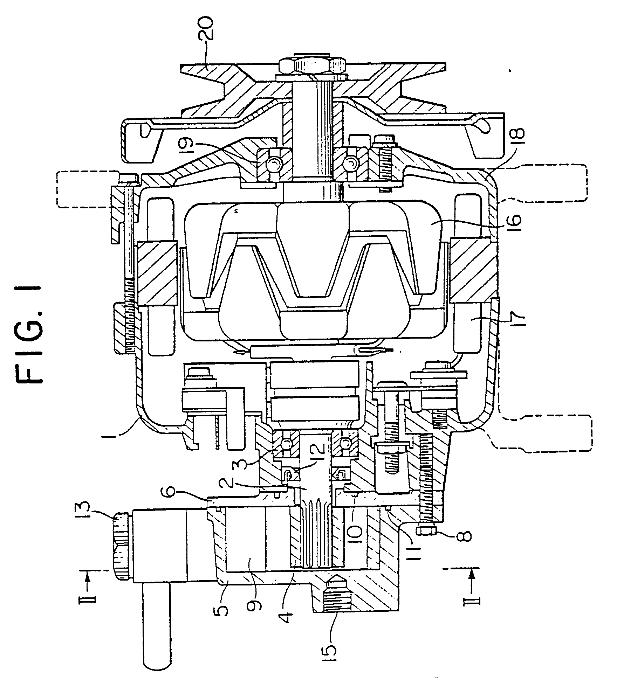

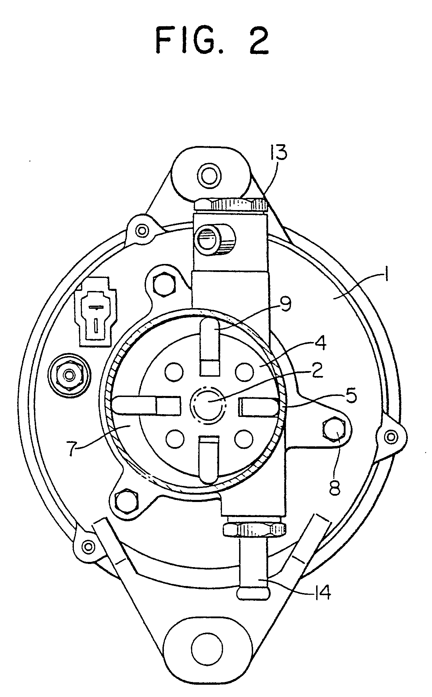

Vacuum pump apparatus of this type are usually mounted on the rear end portion of an electric generator for motor vehicles, and the construction thereof will be described in connection with Figs. 1 and 2.

A rear bracket 1 for an electric generator used with a motor vehicle supports a shaft 2 by means of a bearing 3 wherein the shaft 2 is driven by an engine not shown. A first rotor 4 is fixed to the shaft 2 through a spline fitting. Reference numeral 5 designates a housing having an inner cylindrical peripheral surface eccentric from the centers of the shaft and the first rotor 4. A plate 6 is arranged between the rear bracket 1 and the housing 5 to constitute a pump operating chamber 7. A mounting bolt 8 is provided for fixing the housing 5 and the plate 6 to the rear bracket 1.

Vanes 9 are radially inserted into slots in the first rotor 4 to be slidable in the radial direction. Packings 10 and 11 are provided for keeping the airtightness of junction surfaces between the rear bracket 1 and the plate 6, and between the housing 5 and the plate 6. An oil seal 12 is fixed to the rear bracket 1 and contacted by the periphery of the shaft 2 to keep the airtightness of the pump operating chamber 7. A suction port 13, an exhaust port 14 and on oil supply port 15 are provided on the housing 5 and connect the upper and lower portions of the chamber 7 and the rotor slots to a vacuum tank (or pressure accumulating portion of a master bag), an oil pan and an oil pump, respectively, which are not illustrated.

A second rotor 16 is fixed to the shaft 2 to hold a field winding for the electric generator, and a stator 17 is provided for holding an armature winding. A front bracket 18 constitutes with the rear bracket 1 an outer frame of the electric generator, and a bearing 19 is fixed to this front bracket 18 and rotatably journals the shaft 2. A pulley 20 is fixed to the shaft 2 to receive the transmission of the rotation from the engine.

The operation of such a vacuum pump apparatus is as follows. First, with respect to the vacuum pump, when the rotation of the engine is transmitted to the pulley 20 by a belt to rotate the shaft 2 in the pumping direction the vanes 9 spring outwardly by means of centrifugal force acting on the vanes 9 being rotated while sliding along the inner wall of the housing 5 thereby sucking air from the vacuum tank (or the pressure accumulating portion of the master bag) and propelling the air through the exhaust port 14 to perform the pumping operation. Also, oil is supplied to the interior of the housing 5 through the oil supply port 15 and effects lubrication of the sliding surfaces between the vanes 9 and the rotor 4 and is exhausted to the oil pan through the exhaust port 14.

With respect to the electric generator, an alternating current is induced on the stator 14 by cutting a magnetic field generated by the second rotor 16 by means of the rotation of the shaft 2. This alternating current is rectified to a direct current which flows into a charging circuit at one side of a car body.

The electric generator for motor vehicles is generally belt-driven by the engine for a motor vehicle to be used with the number of rotations per minute equal to about twice that of the engine in view of the power generation characteristic thereof. Thus, regarding the vacuum pump directly connected to the generator, it is also used with the same number of rotations per minute as the generator. For this reason, it is used during rapid acceleration and deceleration between a low rotational speed (about 1000 rpm) and a high rotational speed (about 12,000 rpm) and also the vacuum pump is continually being operated during the operation of the engine.

Thus the components constituting the vacuum pump have been previously required to have the durability and shock resistance with respect to the range of high rotational speeds and long service resulting in an expensive device. Also, since the electric generator is driven through the belt, there has been the disadvantage that a vacuum cannot be obtained when the belt is broken since the vacuum pump then stops.

A vacuum pump apparatus as initially specified is known for example from US—A—2 469 936. This publication describes a rotary pump of the type which is adapted for use as a vacuum, pressure or liquid pump. In this conventional construction, the pump is driven by an electric motor on the driving shaft of which a fan is mounted rotating therewith. Accordingly, one and the same electric motor is used for driving both a cooling fan and a pump. While the basic structure of such a rotary pump is given, the aspects of controlling the electric motor and the pump depending on the specific ambient conditions of the apparatus and the question of lifetime and reliability of such an apparatus are not discussed.

Apparatus for driving auxiliary driven devices of an internal combustion engine, particularly for an automobile, are disclosed in US—A—3 283 527. In this prior art structure several auxiliary devices are connected in series and are driven by a single electric motor; for example the electric motor drives a cooling fan for a radiator as well as a water pump, a fuel pump and a lubrication pump. Such an apparatus may be suitable for quite a number of purposes, but the document is silent as to various problems which are encountered in practice. Especially, no attention is given to both the pressures in the pumps and the temperature of the engine for which the apparatus is provided in order to obtain an enlarged lifetime and reliability of the apparatus in question.

The object underlying the invention is to provide for a vacuum pump apparatus having a controlled operation so as to enhance lifetime and reliability of such an apparatus.

The invention solves this problem in an advantageous manner and is characterized in that the fan is provided for cooling a radiator connected to an engine by first conduit means, in that a vacuum tank is provided which is connected to the vacuum pump by second conduit means, in that the engine is provided with a temperature sensor and the vacuum tank is provided with a pressure sensor, in that a switch is mounted to the apparatus and is connected both to a battery and to the electric motor, and in that the switch is opened and closed by signals from the temperature sensor and the pressure sensor so that the fan and the vacuum pump are operated depending on the respective operating conditions.

According to the present invention, a vacuum pump apparatus is provided wherein both the temperature of the engine and the pressure of the vacuum tank are taken into account for operating the apparatus which enjoys the desired reliability and long lifetime of the apparatus.

One way of carrying out the invention is described in detail below with reference to the drawings which illustrate only one specific embodiment, in which

Fig. 1 is a sectional view illustrating a conventional apparatus;

Fig. 2 is a sectional view along line II—II in Fig. 1;

Fig. 3 is a sectional view illustrating one embodiment of the present invention; and

Fig. 4 is a plan view of an engine compartment of a motor-vehicle for such an embodiment.

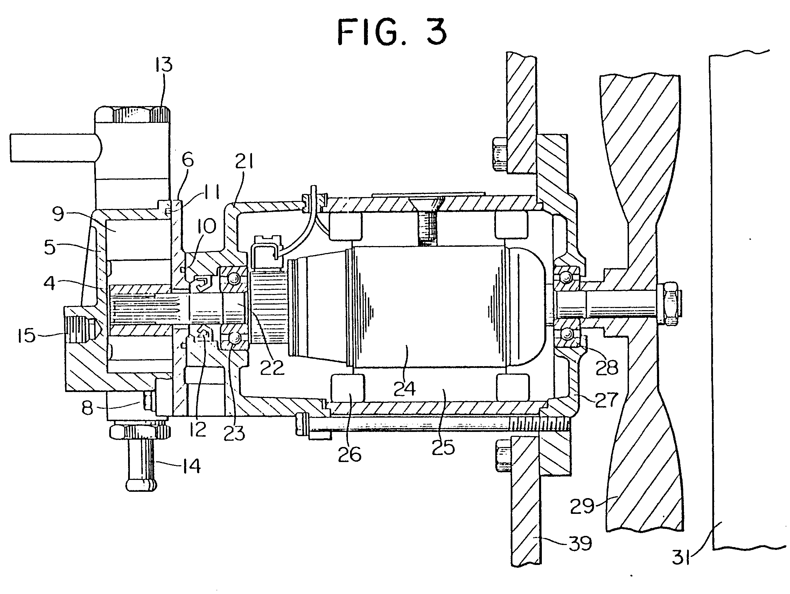

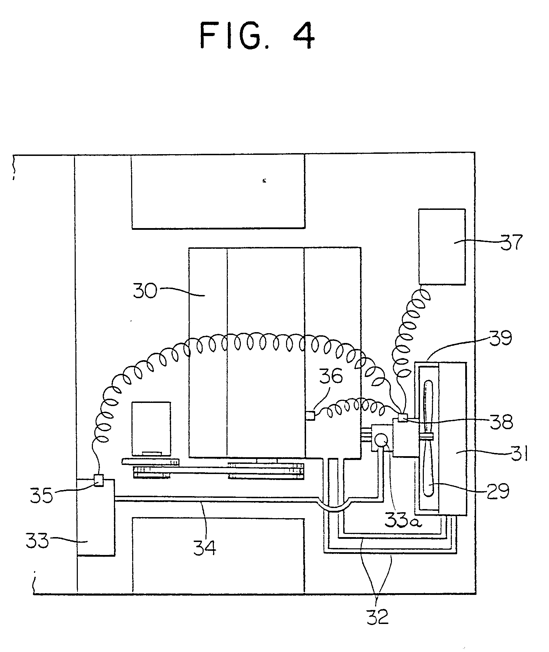

In the following description reference is made to Figs. 3 and 4 showing one embodiment, wherein the same reference numerals are used for the same or corresponding components. In Fig. 3 a rear bracket 21 is provided for an electric motor, and a shaft 22 is rotatably journaled in a bearing 23 carried by this rear bracket 21. Fixed to this shaft 22 is an armature 24. A field iron core 25 is provided to oppose this armature 24 in radial direction, and a field winding 26 is wound on this field iron core 25.

A front bracket 27 is provided, and a bearing 28 is fixed to this front bracket 27 which rotatably journals the shaft 22. A fan 29 is fixed to the shaft 22. Reference numeral 30 designates an engine, and a radiator 31 is provided for cooling this engine 30. First conduit means 32 are provided connecting the radiator 31 and the engine 30 and are arranged to have cooling water for the engine 30 flowing therethrough. A vacuum tank 33 (or a pressure accumulating portion of the master bag) is provided and keeps a vacuum generated by the rotor 4 rotating in the housing of the vacuum pump.

Second conduit means 34 are connected to the vacuum tank 33 and a suction port 33a of the vacuum pump. 35 is a pressure sensor and 36 is a temperature sensor, wherein the pressure sensor 35 is connected to the vacuum tank 33 (or the pressure accumulating portion of the master bag), while the temperature sensor 36 is connected to the engine 30 for sensing the temperature of the cooling water for the engine 30.

A battery 37 is provided, and the pressure sensor 35, the temperature sensor 36 and the battery 37 are connected to a switch 38. A frame 39 is provided by means of which the electric motor is mounted adjacent the radiator 31, the front bracket 27 of the motor being fixed to the frame 39.

By closing the switch 38, the battery 37 supplies this electric motor with electric current flowing through the armature 24 and the field winding 26 in order to rotate the armature 24; by opening the switch 38 the rotation of the armature 24 is stopped. The opening and closing of the switch 38 is controlled by signals from the pressure sensor 35 and the temperature sensor 36. This temperature sensor 36 detects the temperature of the cooling water of the engine 30, and when predetermined temperatures are reached, the switch 38 is opened and closed, respectvely, by the temperature sensor 36 to effect the cooling of the radiator 31. At the same time, the rotor 4 of the vacuum pump is rotated and therefore the pumping operation is performed too.

The pressure sensor 35 detects the degree of vacuum of the vacuum tank 33 or the pressure accumulating portion of the master bag, and when a predetermined degree of vacuum is reached, the pressure sensor 35 opens and closes the switch 38 in order to drive the vacuum pump so that the pumping operation is performed. At the same time, the fan 29 is rotated and therefore is effective in cooling the radiator 31.

Although the rear bracket 21 and the plate 6 have been formed of separate members in the described embodiment, they may be formed by a single member. Also, in the above embodiment the description has been made in conjunction with an oil lubrication system vacuum pump, but a non-lubrication system vacuum pump may also be used.

Furthermore, it is not necessary that the shaft 22 is directly fitted into the rotor 4, rather, the rotor 4 may also be connected by means of a coupling interposed between the shaft 22 and the rotor 4.

### Claim

A vacuum pump apparatus comprising
— a vacuum pump (5, 6, 9) having vanes (9) mounted on a rotor (4) in an operating chamber (5, 7) and capable of pumping a fluid from a suction port (13) to an exhaust port (14) provided on the chamber (5, 7),
— and an electric motor (24-26) having a longitudinal rotary shaft (22) journaled in bearings in a housing (21, 27) and to which the rotor (4) of the vacuum pump and a fan (29) are mounted to be driven rotatably thereby,

characterized in that the fan (29) is provided for cooling a radiator (31) connected to an engine (30) by first conduit means (31),

in that a vacuum tank (33) is provided which is connected to the vacuum pump by second conduit means (34),

in that the engine (30) is provided with a temperature sensor (36) and the vacuum tank (33) is provided with a pressure sensor (35),

in that a switch (38) is mounted to the apparatus and is connected both to a battery (37) and to the electric motor (24-26),

and in that the switch (38) is opened and closed by signals from the temperature sensor (36) and the pressure sensor (35) so that the fan (29) and the vacuum pump (5, 6, 9) are operated depending on the respective operating conditions.

**Patentanspruch**

Unterdruckpumpenvorrichtung, umfassend
— eine Unterdruckpumpe (5, 6, 9), die Flügel (9) aufweist, die auf einem Rotor (4) in einer Arbeitskammer (5, 7) montiert sind, und die der Lage ist, ein Fluid von einer Ansaugöffnung (13) zu einer Auslaßöffnung (14) zu pumpen, die in der Kammer (5, 7) vorgesehen sind,
— und einen Elektromotor (24—26), der eine in Längsrichtung verlaufende, derhbare Welle (22) aufweist, die in Lagern in einem Gehäuse (21, 27) gelagert ist und an oer der Rotor (4) der Unterdruckpumpe und ein Ventilator (29) derart angebracht sind, daß sie mit ihr in Drehrichtung angetrieben sind,
dadurch gekennzeichnet,
daß der Ventilator (29) vorgesehen ist, um einen Radiator (31) zu kühlen, der an einen Motor (30) mit ersten Leitungsmitteln (32) angeschlossen ist,
daß ein Unterdrucktank (33) vorgesehen ist, der mit der Unterdruckpumpe über zweite Leitungsmittel (34) verbunden ist,
daß der Motor (30) mit einem Temperaturmeßfühler (36) versehen ist und der Unterdrucktank (33) mit einem Druckmeßfühler (35) versehen ist,

daß ein Schalter (38) an der Vorrichtung angebracht und sowohl mit einer Batterie (37) als auch mit dem Elektromotor (24—26) verbunden ist,

und daß der Schalter (38) durch Signale von dem Temperaturmeßfühler (36) und dem Druckmeßfühler (35) geöffnet und geschlossen wird, so daß der Ventilator (29) und die Unterdruckpumpe (5, 6, 9) in Abhängigkeit von den jeweiligen Betriebszuständen betrieben werden.

**Revendication**

Appareil de pompe à vide comprenant
une pompe à vide (5, 6, 9) ayant des palettes (9) montées sur un rotor (4) dans une chambre active (5, 7) et capable de pomper un fluide depuis un orifice d'aspiration (13) vers un orifice d'échappement (14) prévus sur la chambre (5, 7),

et un moteur électrique (24—26) ayant un arbre longitudinal tournant (22) porté dans des roulements dans un logement (21, 27) sur lequel le rotor (4) de la pompe à vide et un ventilateur (29) sont montés ce qui permet de les entraîner de façon rotative,

caractérisé en ce que le ventilateur (29) est prévu pour refroidir un radiateur (31) relié à un moteur (30) par des premiers moyens de conduit (32),

en ce qu'un réservoir de dépression (33) est prévu lequel est relié à la pomp à vide par des deuxièmes moyens de conduit (34),

en ce que le moteur (30) est muni d'un capteur de température (36) et le réservoir de dépression (33) est muni d'un capteur pression (35),

en ce qu'un commutateur (38) est monté sur l'appareil et est relié à la fois à la batterie (37) et au moteur électrique (24—26),

et en ce que le commutateur (38) est ouvert et fermé par des signaux du capteur de température (36) et du capteur de pression (35) de telle sorte que le ventilateur (29) et la pompe à vide (5, 6, 9) sont mis en action en fonction des conditions de fonctionnement respectives.

FIG. I

# FIG. 2

FIG. 3

# FIG. 4